**Europäisches Patentamt**

**European Patent Office**

**Office européen des brevets**

(19)

(11) Veröffentlichungsnummer : **0 248 367 B1**

(12) **EUROPÄISCHE PATENTSCHRIFT**

(45) Veröffentlichungstag der Patentschrift :
**05.06.91 Patentblatt 91/23**

(51) Int. Cl.$^5$ : **H01J 29/92**

(21) Anmeldenummer : **87107852.3**

(22) Anmeldetag : **30.05.87**

(54) Kontaktierungsband für einen elektrisch leitenden Belag.

(30) Priorität : **05.06.86 DE 3618948**
**08.05.87 DE 3715474**

(43) Veröffentlichungstag der Anmeldung :
**09.12.87 Patentblatt 87/50**

(45) Bekanntmachung des Hinweises auf die
Patenterteilung :
**05.06.91 Patentblatt 91/23**

(84) Benannte Vertragsstaaten :
**AT BE CH DE ES FR GB GR IT LI LU NL SE**

(56) Entgegenhaltungen :
**US-A- 3 014 087**
**US-A- 3 996 491**

(73) Patentinhaber : **EWD Electronic-Werke
Deutschland GmbH
W-7730 Villingen-Schwenningen (DE)**

(72) Erfinder : **Goseberg, Walter, Dipl.-Ing.
Kopenhagener Strasse 81
W-3000 Hannover 91 (DE)**

(74) Vertreter : **Einsel, Robert, Dipl.-Ing.
E W D Electronic-Werke Deutschland GmbH
Patent- und Lizenzabteilung Göttinger
Chaussee 76
W-3000 Hannover 91 (DE)**

## Beschreibung ·

Bei elektrischen oder elektronischen Bauteilen besteht oft die Aufgabe, einen elektrisch leitenden Belag mit einem Kontaktierungsband zu kontaktieren, um den Belag mit einem Bezugspotential, insbesondere Erde zu verbinden. Ein solches Band ist deshalb notwendig, weil z.B. ein auf eine Glasfläche aufgespritzter Abschirmungsbelag nicht durch Lötung o.dgl. kontaktiert werden kann und außerdem wegen seiner Hochohmigkeit eine Kontaktierung über eine größere Länge bzw. Fläche fordert.

Ein Beispiel für ein derartiges Kontaktierungsband ist das sogenannte Masseband an der Bildröhre eines Fernsehempfängers. Die Bildröhre enthält außen am konusförmigen Teil einen aufgedampften leitenden Belag, den sogenannten Aquadag-Belag, der zusammen mit der Anode innerhalb der Bildröhre einen Kondensator bildet, der als Siebkondensator für die Hochspannung wirkt. Dieser Aquadag-Belag muß mit einem über eine größere Länge anliegenden Kontaktierungsband, einen sogenannten Masseband geerdet werden.

Dabei ist es bekannt, ein aus einem Geflecht bestehendes Masseband um verschiedene Stützpunkte am äußeren Rand der Bildröhre herumzulegen und unter Einfügung von einer oder mehreren Federn so zu spannen, daß es stramm an dem Aquadag-Belag anliegt und die gewünschte großflächige Kontaktierung bewirkt. Das Masseband ist an einer Stelle mit einer Leitung verbunden, die zu einem Erdungspunkt des Gerätechassis oder Bildröhrenplatine führt.

Die Kosten für das genannte Masseband und die Anbringung auf/an der Bildröhre sind relativ hoch, zumal das Masseband nicht automatisch angebracht werden kann, sondern manuell an den einzelnen Stützpunkten befestigt werden muß.

Der Erfindung liegt die Aufgabe zugrunde, die Kosten für das Kontaktierungsband und für dessen Anbringung an dem leitenden Belag zu verringern.

Diese Aufgabe wird durch die im Anspruch 1 beschriebene Erfindung gelöst. Vorteilhafte Weiterbildungen der Erfindung sind in den afhängigen Ansprüchen beschrieben.

Bei der erfindungsgemäßen Lösung entfallen weitestgehend bisher benötigte Haken und Federn. Das gummielastische Band ist vorzugsweise ein in sich geschlossenes endloses Band, also ähnlich wie ein Gummiring, das lediglich um zapfenartige Vorsprünge an der Bildröhre herumgelegt zu werden braucht. Eine oder mehrere Federn zur Erzielung der strammen Auflage auf dem leitenden Belag werden nicht benötigt, weil die erforderliche Federwirkung durch das Band selbst erzeugt wird. Die notwendige Federwirkung ist also in Form einer sehr großen Zahl kleiner Federn in das Kontaktierungsband hinein integriert. Die Montage wird wesentlich vereinfacht, weil das manuelle Einhängen der Federn in ösen des Kontaktierungsbandes sowie das Einhängen der Federn in ösen an dem den Belag tragenden Bauteil entfallen.

Bei einer vorteilhaften Weiterbildung der Erfindung besteht das Gewebegeflecht des Bandes zusätzlich aus Textilfäden. Diese Textilfäden können einen Teil der Kupferdrähte ersetzen und zusammen mit diesen geklöppelt, gewebt, gehäkelt oder gestrickt werden. Der Ersatz der Kupferdrähte durch Textilfäden bringt einmal eine Gewichts- und Kostenersparnis auf Grund des Materialpreises bei dem Band selbst, zum anderen erleichtert es aber auch die Fertigung. Der letztgenannte Umstand beruht darauf, daß die für die Herstellung der Bänder geeigneten üblichen Klöppel-, Web- oder Strickmaschinen nur eine verhältnismäßig geringe Länge Kupferdraht auf ihren Spindeln aufnehmen können. Dies liegt an der im Vergleich zu textilem Material wesentlichen höheren Masse von Kupfer, für die bei vergleichbarer Länge die Stabilität der Aufnahmevorrichtung nicht bemessen ist und bei der außerdem durch die Trägheitkräfte bei der Drahtentnahme leicht Drahtbrüche auftreten könnten. Es werden deshalb kleinere Spindeln verwendet, die aber ein häufigeres Auswechseln, verbunden mit einem vorübergehenden Maschinenstillstand erforderlich machen.

Der teilweise Ersatz der Kupferdrähte durch Textilfäden vermindert sowohl den Bedarf an Kupferdraht und damit die Austauschrate der Kupferdrahtspindeln als auch zusätzlich den Maschinenverschleiß, der bei der Verarbeitung von Textilfäden geringer als bei der Verarbeitung von Kupferdraht ist. Der gemäß einer praktischen Ausführungsform getroffene Anteil von etwa 20 bis 50% Kupferdrähte an dem gesamten aus Kupferdrähten und Textilfäden gebildeten Gewebeteil sorgt dafür, daß die elektrische Leitfähigkeit für den vorgesehenen Zweck auch dann erhalten bleibt, wenn ein Teil der Kupferfäden durch Fertigungsfehler, Materialermüdung oder unsachgemäße Behandlung brechen.

Die Erfindung ist besonders vorteilhaft anwendbar für däs Masseband bei der Bildröhre eines Fernsehempfängers, das die notwendige Erdung des sogenannten Aquadag-Belages auf der äußeren Oberfläche der Bildröhre bewirkt. Dort werden insbesondere die Kosten für das relativ teure Masseband sowie die für die manuellen Vorgänge, des sogenannten Handling, beträchtlich verringert.

Die Erfindung wird in folgenden anhand der Zeichnung am Beispiel der Bildröhre des Fernsehempfängers erläutert. Darin zeigen

　　Fig. 1 die Bildröhre eines Fernsehempfängers mit dem erfindungsgemäßen Masseband,

　　Fig. 2 im Prinzip den Aufbau eines erfindungsgemäßen Massebandes,

　　Fig. 3 eine bevorzugte Ausgestaltung eines erfindungsgemäßen Massebandes und

Fig. 4-7 verschiedene Formen des Massebandes.

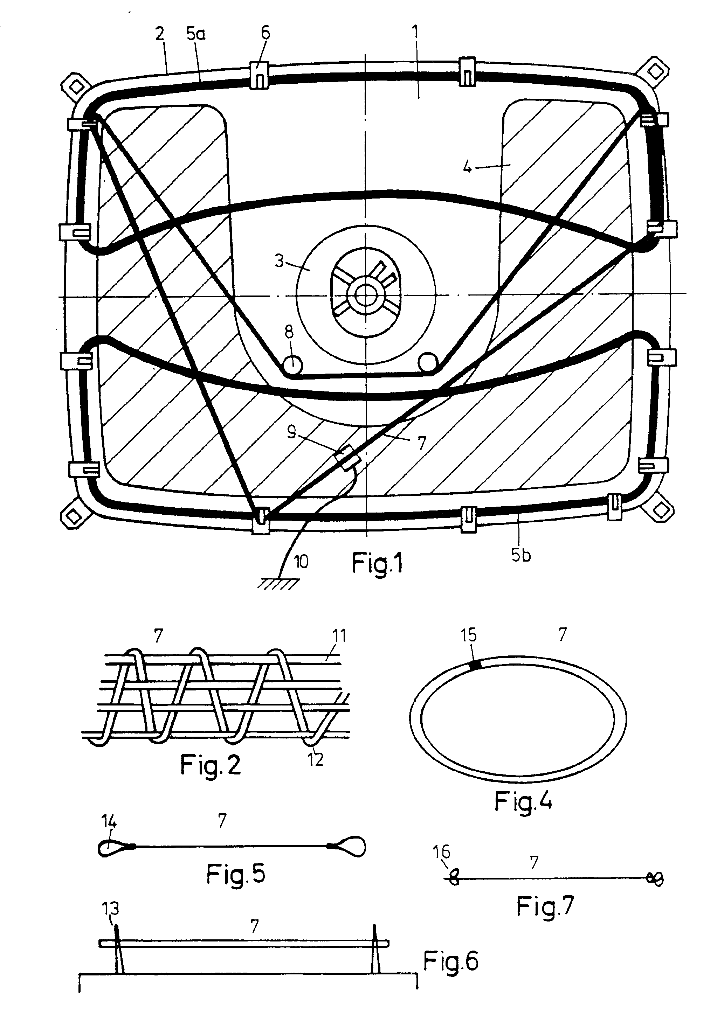

Fig. 1 zeigt eine Bildröhre 1, die von dem Spannband 2 aus Blech umgeben ist. Dargestellt sind der Röhrenhals 3 und der auf die Bildröhre 1 aufgedampfte Aquadag-Belag 4, der zusammen mit einem im Inneren der Bildröhre aufgebrachten ähnlichen Belag den Hochspannungskondensator bildet. An der Bildröhre 1 sind die beiden Entmagnetisierungspulen 5a und 5b vorgesehen, die in eine Vielzahl von Haken 6 an dem Spannband 2 eingehängt sind.

Die notwendige Kontaktierung des großflächigen Aquadag-Belages 4 für die Erdung erfolgt mit dem endlosen, also in sich geschlossenen ringartigen, gummielastischen Band 7. Das Band 7 ist unter Dehnung um Vorsprünge 8 und um Haken an den Befestigungsklammern 6 für die Entmagnetisierungsspule 5a und 5b herumgelegt. In Fig. 1 dienen insgesamt vier derartige zur Halterung der Entmagnetisierungsspule 5a, 5b dienende Befestigungsklammern 6 am Rahmen des Bildschirms zusätzlich als Aufnahmepunkte zusammen mit den Vorsprüngen 8 zur Halterung des Bandes 7. Durch die Dehnung des Bandes 7 ergibt sich die notwendige federnde und stramme Anlage des Bandes 7 an dem Belag 4. Das Band 7 besteht z.B. aus einem Material, das eine Dehungsfähigkeit ohne wesentliche Restdehnung in der Größenordnung von 90-120% aufweist.

Grundsätzlich können die zur Aufnahme des Bandes 7 dienenden Vorsprünge, Zapfen oder Haken je nach ihrer Lage oder je nach dem Aufbau der Bildröhre an dem Spannband 2, unmittelbar an der Bildröhre oder an der auf den Hals 3 aufgesetzten Ablenkeinheit angeordnet sein. Durch das in sich geschlossene, ringförmige Band 7 werden also die bisher benötigten getrennten Federn im Weg des Bandes 7 nicht mehr benötigt. Damit entfällt auch das Einhängen der Federn in das Band sowie das Einhängen der Federn in entsprechende Haken an der Bildröhre, da das dehnbare Band 7 lediglich um die beschriebenen Zapfen, Vorsprünge oder Haken herumgelegt zu werden braucht.

An dem Band 7 ist mit der Klemme 9 die Leitung 10 aus einer isolierten Kupferlitze befestigt, die das Band 7 mit Erdpotential des Empfängerchassis oder Bildrohrplatine verbindet. Im einfachsten Fall sind insgesamt nur drei Zapfen 8 oder sonstige Aufnahmemittel für das Band 7 vorgesehen, z.B. zwei oben links und rechts und eins unten in der Mitte, so daß das Band 7 einen etwa dreieckförmigen Verlauf hat. In Fig. 1 ist das Band 7 zwischen der unteren linken und der oberen rechten Ecke des Bildschirms an der nicht dargestellten Ablenkeinheit gehalten und hat dadurch gegebenenfalls einen gekrümmten Verlauf.

Gemäß Fig. 2 besteht das Band 7 aus in Längsrichtung verlaufenden Gummifäden 11, die von einer Vielzahl von Kupferdrähten 12 durchschossen sind. Die Kupferdrähte 12, die unisoliert und verzinnt sind, bilden für das Band 7 die erforderliche leitende Oberfläche. Bei der Dehnung des Bandes 7 dehnen sich die Gummifäden 11 in Längsrichtung. Die Kupferdrähte 12 können sich nicht dehnen und werden durch die Verringerung der Breite des Bandes 7 praktisch gestreckt, d.h. die geometrische Länge der gebildeten mäanderförmigen Form wird in Längsrichtung verlängert.

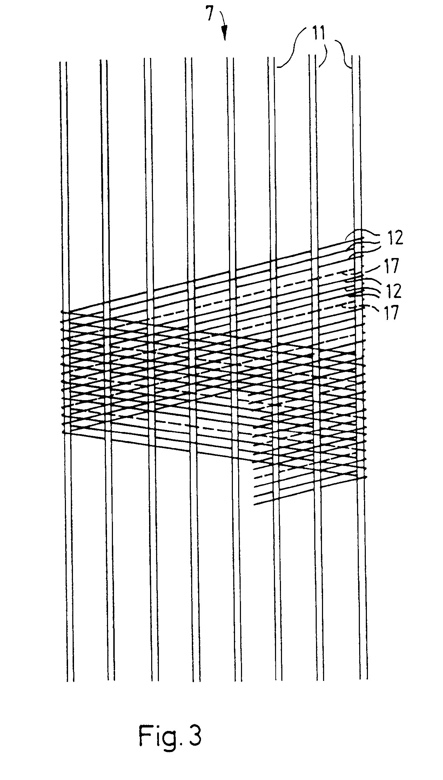

Bei der Ausgestaltung in Fig. 3 ist das Band 7 zusätzlich zu den in Längsrichtung verlaufenden Gummifäden 11 und den Kupferdrähten 12 mit Textilfäden 17 versehen. Die Kupferdrähte 12 bilden weiterhin die leitende Oberfläche, während die Textilfäden 17 zur mechanischen Flexibilität und Elastizität beitragen. Bei Dehnung des Bandes 7 in Längsrichtung dehnen sich die Textilfäden 17 praktisch ebensowenig wie die Kupferdrähte 12 sondern werden lediglich durch Verringerung der Breite des Bandes 7 gestreckt. Neben einem geringeren Gewicht und einer höheren Flexibilität ist auch der Materialkostenanteil auf Grund des kleineren Kupferdrahtanteils geringer. Vorzugsweise werden etwa zwischen 11 und 13 Fäden verwendet, wobei der Anteil der Kupferdrähte 12 etwa bei 3 bis 5 liegt. Auf diese Weise ist sichergestellt, daß auch bei einem eventuellen Drahtbruch noch eine Reserve vorhanden ist und die Funktionstüchtigkeit des Bandes 7 erhalten bleibt. Zweckmäßig sind die Kupferdrähte 12 und Textilfäden 17 parallel verstrickt und gleichmäßig nebeneinander verteilt.

Gemäß Fig. 4 ist das Band 7, das z.B. wie in Fig. 2 oder 3 aufgebaut ist, als in sich geschlossener endloser Ring ausgebildet und kann gemäß Fig. 1 durch eine leichte Handhabe um die Zapfen 8 herumgelegt werden. Vorzugsweise ist ein zunächst gerades Band 7 an einer Stelle 15 durch eine Klammer oder eine sonstige sogenannte Schließe zu einem Ring verbunden.

In Fig. 5 ist das Band 7 mit zwei Enden versehen, die je eine öse 14 enthalten. Dadurch kann beispielsweise das Band 7 mit den ösen 14 an zwei Zapfen 8 aufgesetzt und um einen dritten Zapfen 8 an der Bildröhre 1 herumgelegt werden.

Gemäß Fig. 6 ist das Band 7 auf an der Bildröhre angeordnete Zapfen 13 aufgespießt, indem der spitz ausgebildete Zapfen 13 unter geringer Verformung in das Geflecht gemäß Fig. 2 oder 3 eindringt.

In Fig. 7 ist statt der ösen 14 in Fig. 5 das Band 7 an seinen Enden mit zwei Knoten 16 versehen, mit denen das Band 7 z.B. in ösen von Befestigungsmitteln an der Bildröhre 1 eingehängt werden kann.

## Ansprüche

1. Belagkontaktierungsband zur Verbindung des elektrisch leitenden Belags der Bildröhre (1) in einem Fernsehempfänger mit einem Berugspotential,

dadurch gekennzeichnet, daß das Kontaktierungsband als gummielastisches Band (7) mit elektrisch leitender, unisolierter Oberfläche ausgebildet ist, die in montiertem Zustand an dem Belag anliegt um eine großflächige Kontaktierung zu bewirken.

2. Band nach Anspruch 1, **dadurch gekennzeichnet**, daß das Band (7) ein endloses, in sich geschlossenes Band ist.

3. Band nach Anspruch 1, **dadurch gekennzeichnet**, daß die gummiartigen Teile des Bandes aus Lycra bestehen.

4. Band nach Anspruch 1, **dadurch gekennzeichnet**, daß es aus Leitgummi besteht.

5. Band nach Anspruch 1, **dadurch gekennzeichnet**, daß es eine Dehnungsfähigkeit ohne wesentliche verbleibende Dehnung von 90-120% aufweist.

6. Band nach Anspruch 1, **dadurch gekennzeichnet**, daß es aus einem Gewebegeflecht mit Gummifäden (11) und blanken oder verzinnten Kupferdrähten (12) besteht.

7. Band nach Anspruch 6, **dadurch gekennzeichnet**, daß es zusätzlich aus Textilfäden (17) besteht.

8. Band nach Anspruch 6 oder 7, **dadurch gekennzeichnet**, daß es mehrere parallel verstrickte Kupferdrähte (12) und/oder Textilfäden (17) umfaßt.

9. Band nach Anspruch 8, **dadurch gekennzeichnet**, daß die Kupferdrähte (12) und Textilfäden (17) gleichmäßig nebeneinander verteilt sind.

10. Band nach Anspruch 8 oder 9, **dadurch gekennzeichnet**, daß der Anteil der Kupferdrähte (12) nur etwa 20 bis 50% der gesamten aus Kupferdrähten (12) und Textilfäden (17) gebildeten Gewebeteile darstellt.

11. Band nach einem oder mehreren der Ansprüche 5 bis 10, **dadurch gekennzeichnet**, daß das Band (7) parallel zueinander in Längsrichtung verlaufende Gummifäden (11) enthält, die von im wesentlichen schräg zur Längsrichtung zickzack förmig oder mäanderförmig verlaufenden Kupferdrähten (12) und/oder Textilfäden (17) durchschossen sind.

12. Fernsehempfänger mit einem Kontaktierungsband nach einem oder mehreren der Ansprüche 1 bis 11, **dadurch gekennzeichnet**, daß das Band (7) unter Dehnung an verschiedenen Vorsprüngen (6, 8) an der Bildröhre (1) eingehängt ist und ohne Verwendung gesonderter Federn stramm auf dem Aquadag-Belag (4) der Bildröhre (1) aufliegt.

13. Fernsehempfänger nach Anspruch 12, **dadurch gekennzeichnet**, daß das Band (7) an einer zur Halterung der Entmagnetisierungsspule (5) dienenden Einrichtung eingehängt ist.

14. Fernsehempfänger nach Anspruch 13, **dadurch gekennzeichnet**, daß das Band (7) in haken förmige Vorsprünge an Kunststoff-Befesti-gungsklammern (6) für die Entmagnetisierungsspule (5a, 5b) eingehängt ist.

Claims

1. Coating contacting tape for connecting the electrically conductive coating of the picture tube (1) in a television receiver with a reference potentiel, characterized in that the contacting tape is constructed as an elastic rubber tape (7) with an electrically conductive, non-insulated surface which in the mounted state lies against the coating in order to produce a large area of contact.

2. Tape according to claim 1, characterized in that the tape (7) is an endless, self-contained tape.

3. Tape according to claim 1, characterized in that the rubber-type parts of the tape consist of Lycra.

4. Tape according to claim 1, characterized in that it consist of conductive rubber.

5. Tape according to claim 1, characterized in that it possesses an extensibility without substantial residual extension of 90-120%.

6. Tape according to claim 1, characterized in that it consists of a woven braid of rubber threads (11) and bare or tinned copper wires (12).

7. Tape according to claim 6, characterized in that it consists additionally of textile filaments (17).

8. Tape according to claim 6 or 7, characterized in that it comprises a plurality of parallel knitted copper wires (12) and/or textile filaments (17).

9. Tape arrording to claim 8, characterized in that the copper wires (12) and textile filaments (17) are distributed uniformly next to one another.

10. Tape according to claim 8 or 9, characterized in that the proportion of copper wires (12) comes to only some 20 to 50% of the total woven parts formed of copper wires (12) and textile filaments (17).

11. Tape according to one or more of claims 5 to 10, characterized in that the tape (7) contains rubber threads (11) running parallel to each other in the longitudinal direction, which are interwoven with copper wires (12) and/or textile filaments (17) running mainly inclined to the longitudinal direction in the form of a zigzap or the form of a meander.

12. Television receiver with a contacting tape according to one or more of claims 1 to 11, characterized in that the tape (7) is suspended under extension on various projections (6, 8) on the picture tube (1) and lies tightly on the aquadag coating (4) of the picture tube (1) without the use of separate springs.

13. Television receiver according to claim 12, characterized in that the tape (7) is suspended on a device serving as holder for the degausser (5).

14. Television receiver according to claim 13, characterized in that the tape (7) is suspended in hook-shaped projections on fixing clamps (6) of plastics material for the degausser (5a, 5b).

## Revendications

1. Bande de contactage pour couche pour relier la couche conductrice du tube image (1) d'un récepteur de télévision au potentiel de référence, caractérisée en ce que la bande de contactage est formée comme une bande (7) en gomme élastique avec une surface nue conductrice qui repose, à l'état monté, sur la couche pour provoquer un contactage de grande surface.

2. Bande selon la revendication 1, caractérisée en ce que la bande (7) est une bande sans fin, fermée en soi.

3. Bande selon la revendication 1, caractérisée en ce que les pièces de type caoutchouc sont en lycra.

4. Bande selon la revendication 1, caractérisée en ce qu'elle est en caoutchouc conducteur.

5. Bande selon la revendication 1, caractérisée en ce qu'elle présente une capacité d'extension de 90 à 120% sans allongement permanent substantiel.

6. Bande selon la revendication 1, caractérisée en ce qu'elle est constituée par un entrelacement tissé de fils de caoutchouc (11) et de fils de cuivre nus ou étamés.

7. Bande selon la revendication 6, caractérisée en ce qu'elle est constituée, en plus, par des fils textiles (17).

8. Bande selon la revendication 6 ou 7, caractérisée en ce qu'elle comprend plusieurs fils de cuivre (12) et/ou fils textiles (17) tricotés parallèlement.

9. Bande selon la revendication 8, caractérisée en ce que les fils de cuivre (12) et les fils textiles (17) sont répartis régulièrement les uns à côté des autres.

10. Bande selon la revendication 8 ou 9, caractérisée en ce que la proportion des fils de cuivre (12) ne représente qu'environ 20 à 50% de l'ensemble des parties tissées formées par les fils de cuivre (12) et les fils textiles (17).

11. Bande selon l'une ou plusieurs des revendications 5 à 10, caractérisée en ce que la bande (7) contient des fils de caoutchouc (11), allant dans le sens longitudinal parallèlement les uns aux autres, qui sont entrelacés de fils de cuivre (12) et/ou de fils textiles (17) allant substantiellement en forme de zigzag diagonalement par rapport au sens longitudinal ou en forme de méandre.

12. Récepteur de télévision avec une bande de contactage selon l'une ou plusieurs des revendications 1 à 11, caractérisé en ce que la bande (7) est accrochée en s'allongeant à différentes saillies (6, 8) du tube image (1) et repose en étant tendue sur la couche en aquadag (4) du tube image (1) sans utiliser de ressorts séparés.

13. Récepteur de télévision selon la revendication 12, caractérisé en ce que la bande (7) est accrochée à un dispositif servant à la fixation de la bobine de démagnétisation (5).

14. Récepteur de télévision selon la revendication 13, caractérisé en ce que la bande (7) est accrochée dans des saillies en forme de crochet sur des pinces de fixation en plastique (6) pour la bobine de démagnétisation (5a, 5b).

Fig.1

Fig.2

Fig.4

Fig.5

Fig.6

Fig.7

6

Fig. 3